(19) Europäisches Patentamt
European Patent Office
Office européen des brevets

(11) Veröffentlichungsnummer : **0 087 715**
**B1**

(12) # EUROPÄISCHE PATENTSCHRIFT

(45) Veröffentlichungstag der Patentschrift : **07.08.85**

(51) Int. Cl.[4] : **C 09 B 45/26**// D06P1/10, D06P3/06

(21) Anmeldenummer : **83101642.3**

(22) Anmeldetag : **21.02.83**

(54) **Sulfonamid- und aminogruppenfreie Metallkomplexfarbstoffe.**

(30) Priorität : **02.03.82 DE 3207331**

(43) Veröffentlichungstag der Anmeldung : **07.09.83 Patentblatt 83/36**

(45) Bekanntmachung des Hinweises auf die Patenterteilung : **07.08.85 Patentblatt 85/32**

(84) Benannte Vertragsstaaten : **CH DE FR GB IT LI**

(56) Entgegenhaltungen :
**EP-A- 0 037 377**
**BE-A- 494 716**
**DE-A- 3 018 761**
**FR-A- 1 451 845**
**GB-A- 2 002 410**
**CHEMICAL ABSTRACTS, Band 92, Nr. 12, März 1980, Seite 68, Nr. 95623s, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Grychtol, Klaus, Dr.**
**Seebacher Strasse 96A**
**D-6702 Bad Duerkheim (DE)**
Erfinder : **Baumann, Hans, Dr.**
**Roemerweg 31**
**D-6706 Wachenheim (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft sulfonamid- und aminogruppenfreie Verbindungen, die in Form der freien Säuren der allgemeinen Formel I

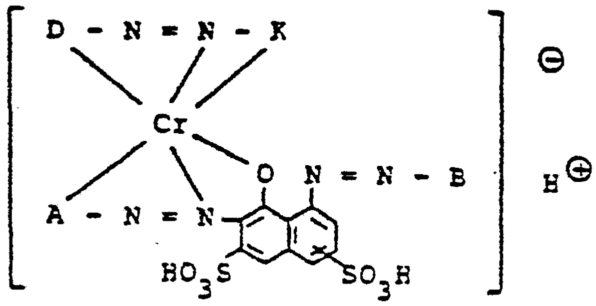

(I)

entsprechen, in der

A ein Rest einer Diazokomponente der Benzol- oder Naphthalinreihe mit einer Hydroxy- oder Carboxygruppe in Nachbarstellung zur Azobrücke,

B und

K der Rest einer Kupplungskomponente und

D der Rest einer aromatischen Diazokomponente sind, wobei K und D jeweils in o-Stellung zur Azogruppe eine metallisierbare Gruppe tragen, mit der Maßgabe, daß die Verbindungen der Formel I insgesamt 4 oder 5 Sulfogruppen tragen.

Die Farbstoffe der Formel (I) enthalten keine faserreaktive Gruppe, d. h. keine Gruppe, welche unter den üblichen Färbebedingungen mit Cellulose- oder Polyamidmaterial unter Bildung einer chemischen Bindung zu reagieren vermag. Die Farbstoffe der Formel I haben keine Sulfonamid-, freie Amino- oder Monoalkylaminogruppen.

Die in der EP-A-0 037 377 beschriebenen Farbstoffe unterscheiden sich von der erfindungsgemäßen Verbindungen durch die andere Position der nicht an der Komplexbildung beteiligten Azogruppe.

Vorzugsweise trägt der Rest A in o-Stellung zur Diazogruppe eine Hydroxygruppe.

Der Rest der Kupplungskomponente B leitet sich vorzugsweise von folgenden Gruppen von Kupplungskomponenten ab : Phenole, Naphthole, Pyrazolone, Pyridone, Acetessigsäureamide, insbesondere -anilide.

Die Reste A und B können einen oder mehrere weitere Substituenten tragen, z. B. niedermolekulares Alkyl oder Alkoxy, Chlor, Brom, Nitro, Cyano, Sulfo- oder Acylamino. Unter niedermolekularen Alkyl- oder Alkoxygruppen sind solche mit 1-6, vorzugsweise 1-2 C-Atomen zu verstehen und mit « Acylamino » werden niedrigmolekulare Alkanoylamino-, Alkoxycarbonylamino- oder Aroylaminoreste bezeichnet.

Der Rest A leitet sich beispielsweise von folgenden Aminen ab : Anthranilsäure, 4- oder 5-Sulfoanthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,5-Dinitro-2-amino-1-hydroxybenzol, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 4-Chlor-2-amino-1-hydroxybenzol-6-sulfosäure, 1-Amino-2-hydroxy-naphthalin-4-sulfosäure, 1-Amino-2-hydroxy-6-nitronaphthalin-4-sulfosäure, 2-Amino-1-hydroxybenzol-4,6-disulfosäure.

Statt der oben genannten Amine mit Hydroxygruppe kommen auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-Sulfosäure, oder tosyliertes 1-Hydroxy-2-aminobenzol, wobei die Methoxy- oder O-Tosylgruppe bei der Metallisierung in eine OH-Gruppe umgewandelt wird. Verbindungen mit diesen Gruppen werden vor allem dann eingesetzt, wenn die entsprechenden 1-Hydroxy-2-aminoverbindungen schlecht kuppeln.

Vorzugsweise ist A der Rest eines 1-Hydroxy-2-aminobenzols, welcher durch Chlor, Nitro und/oder Sulfo substituiert ist. Insbesondere stellt A den Rest eines 1-Hydroxy-2-amino-4-nitrobenzols dar, welcher gegebenenfalls noch eine Sulfogruppe trägt.

Bevorzugte Kupplungskomponenten B sind die folgenden : gegebenenfalls durch niedermolekulares Alkyl oder Alkoxy oder Acylamino substituiertes Phenol, wobei Acylamino die oben angegebene Bedeutung hat, Resorcin, gegebenenfalls durch niedermolekulares Alkyl, Alkoxy, Chlor, Acylamino oder Sulfo substituierte Naphthole, wobei Acylamino die angegebene Bedeutung hat.

5-Pyrazolone, die in 1-Stellung einen gegebenenfalls durch Chlor, Nitro, niedrigmolekulare Alkyl- oder Alkoxygruppen oder Sulfogruppen substituierten Phenyl- oder Naphthylrest haben und in 3-Stellung

eine $C_1$-$C_4$ Alkylgruppe, insbesondere eine Methylgruppe, aufweisen.

Acetessigsäureanilide und Benzoylessigsäureanilide, die im Anilidkern gegebenenfalls mit Chlor, Brom, niedrigmolekularen Alkyl-, Alkoxy- oder Sulfogruppen substituiert sein können, oder 6-Hydroxy-3-cyano- oder 6-Hydroxy-3-carbonamido-4-alkyl-2-pyridone, die in 1-Stellung durch niedrigmolekulares, gegebenenfalls substituiertes Alkyl, z. B. Methyl, Aethyl, Isopropyl, β-Hydroxyäthyl, β-Aminoäthyl oder γ-Isopropoxypropyl oder durch Phenyl substituiert sind, und in 4-Stellung eine niedrigmolekulare Alkylgruppe, insbesondere Methyl, tragen können.

Beispiele solcher Kupplungskomponenten sind : 2-Naphthol, 1,3- oder 1,5-Dihydroxynaphthalin, 1-Naphthol, 1-Acetylamino-7-naphthol, 1-Propionylamino-7-naphthol, 1-Carbomethoxyamino-7-naphthol, 1-Carboäthoxy-amino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 5,8-Dichlor-1-naphthol, 5-Chlor-1-naphthol, 1-Phenyl-3-methylpyrazol-5-on, 1-Phenyl-5-pyrazolor-3-carbonsäureamid, 1-(2'-, 3'- oder 4'-Methylphenyl)-3-methylpyrazol-5-on, 1-(2'-, 3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2', 5'- oder 3',4'-Dichlorphenyl)-3-methylpyrazol-5-on, 1-(2',5'-Dichlor-4'-sulfophenyl)-3-methylpyrazol-5-on, Acetoacetanilid, Acetoacetanilid-4-sulfosäure, Acetoacet-o-anisidid, Acetoacet-o-toluidid, Acetoacet-o-chloranilid, Acetoacet-m-xylidid, Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenyl, 2-Isopropyl-4-methylphenol, 2- oder 3-Acetylamino-4-methylphenol, 2-Methoxycarbonyl-amino-4-methylphenol, 2-Aethoxycarbonylamino-4-methylphenol und 3,4-Dimethylphenol, Resorcin, 1-Methyl-3-cyano-4-äthyl-6-hydroxypyridon, 1-Methyl-3-cyano-4-methyl-6-hydroxypyridon, 1-Phenyl-3-carbonamido-4-methyl-6-hydroxypyridon.

Vorzugsweise stellt die Kupplungskomponente B ein 1- oder 2-Naphthol, Resorcin, p-Alkyl($C_1$-$C_6$)-Phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

Als Farbstoffe der Formel

$$D-N=N-K \qquad (II)$$

kommen vor allem die bekannten metallisierbaren Farbstoffe in Frage, beispielsweise die im « Coluor Index » als mordant dyes aufgeführten, die frei von Sulfonamid-, Amino- und Monoalkylaminogruppen sind.

Vorzugsweise ist D der Rest eines 1-Hydroxy-2-aminobenzols oder 1-Amino-2-hydroxynaphthalins, welches noch durch Nitro und/oder Sulfo substituiert ist.

K stellt vorzugsweise den Rest einer der folgenden Kupplungskomponenten dar : gegebenenfalls durch Sulfo substituiertes 1-Naphthol oder 2-Naphthol, in p-Stellung durch $C_1$-$C_6$-Alkyl substituiertes Phenol, gegebenenfalls durch Sulfo substituierte 1- oder 2-Naphthylamine, 1-Phenyl-3-methyl-5-pyrazolon oder Acetessigsäureanilid, wobei die Phenylgruppe in den beiden letztgenannten Verbindungen durch $C_1$-$C_4$-Alkoxy, Chlor oder Sulfo substituiert sein kann.

Besonders bevorzugte erfindungsgemässe Farbstoffe sind die Verbindungen, die in Form der freien Säure der Formel III

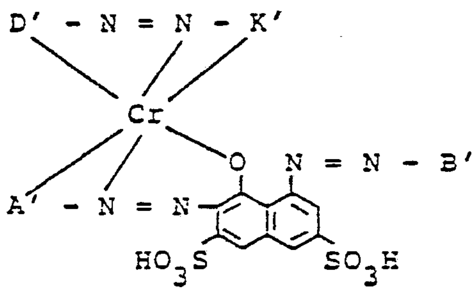

(III)

entsprechen, worin A' der Rest eines 1-Hydroxy-2-aminobenzols ist, welcher ein- oder zweimal durch Chlor, Nitro oder Sulfo substituiert ist, B' ein 2-Naphthol-, Resorcin-, p-Alkyl-($C_1$-$C_6$)-phenol-, 1-Phenyl-3-methyl-5-pyrazolon- oder Acetessigsäureanilidrest, wobei die Phenylgruppe in den beiden letztgenannten Verbindungen durch $C_1$-$C_4$-Alkyl, $C_1$-$C_4$-Alkoxy, Chlor oder Sulfo substituiert sein kann, K' ein gegebenenfalls durch Sulfo substituierter 1-Naphthol- oder 2-Naphtholrest, in p-Stellung durch $C_1$-$C_6$-Alkyl substituierter Phenolrest, ein gegebenenfalls durch Sulfo substituierter 2-Naphthylamin-, ein 1-Phenyl-3-methyl-5-pyrazolon- oder Acetessigsäureanilidrest, wobei die Phenylgruppe in den beiden letztgenannten Verbindungen durch $C_1$-$C_4$-Alkoxy, Chlor oder Sulfo substituiert sein kann und D' den Rest eines 1-Hydroxy-2-aminobenzols oder 1-Amino-2-hydroxynaphthalins, welches noch durch Nitro und/oder Sulfo substituiert ist, bedeuten.

Die metallisierbaren Verbindungen der Formel IV

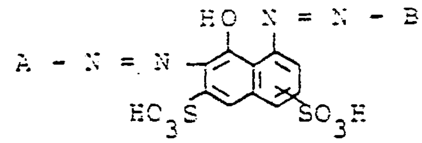

(IV)

werden nach an sich bekannten Methoden erhalten, indem man z. B. ein Amin der Formel V

$$A—NH_2 \qquad (V)$$

diazotiert und mit der Kupplungskomponente der Formel VI

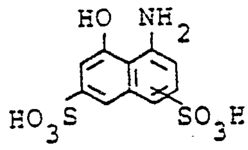

(VI)

bei alkalischem pH-Wert kuppelt. Anschließend wird dann die Aminogruppe am Naphthalin diazotiert und mit einer Kupplungskomponente B gekuppelt. A und B weisen dabei die oben angegebene Bedeutung auf.

Die Darstellung der erfindungsgemäßen 1 : 2-Chromkomplexe der oben angegebenen Formel I, welche einen Farbstoff der Formel II und einen Farbstoff der Formel IV enthalten, erfolgt z. B. indem man zunächst den einen dieser Farbstoffe, vorzugsweise den Farbstoff II, mit einem chromabgebenden Mittel zum 1 : 1-Komplex umsetzt. Anschließend wird dieser dann durch Reaktion mit dem anderen Farbstoff in einen 1 : 2-Komplex umgewandelt. Diese Umwandlung erfolgt zweckmäßig in neutralem bis schwach alkalischem Medium, in offenem oder geschlossenem Gefäß, bei erhöhter Temperatur, z. B. bei Temperaturen zwischen 50 und 120 °C. Man kann in organischen Lösungsmitteln, z. B. Alkoholen oder Ketonen arbeiten oder in wässriger Lösung, wobei Zusätze von Lösungsmitteln, wie z. B. von Alkoholen, Formamid, etc., gegebenenfalls die Umsetzung fördern können. Es empfiehlt sich im allgemeinen möglichst stöchiometrische Mengen des 1 : 1-Komplexes und des metallfreien Farbstoffes miteinander umzusetzen. Ein Überschuß an metallhaltigem Farbstoff wirkt sich in der Regel weniger nachteilig aus als ein solcher an metallfreiem Farbstoff.

Es ist auch möglich, ein Gemisch der Farbstoffe der Formeln II und IV mit einem chromabgebenden Mittel umzusetzen.

Ein weiteres Verfahren zur Herstellung der erfindungsgemäßen 1 : 2 Chromkomplexe der oben angegebenen Formel I besteht darin, daß man zunächst einen 1 : 2 Chromkomplex der Formel VII

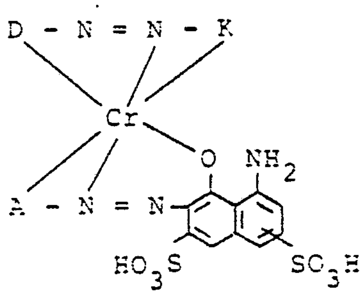

(VII)

herstellt, diesen auf übliche Weise diazotiert, z. B. mit Salzsäure und Natriumnitritlösung, und anschließend mit einer Kupplungskomponente H-B kuppelt. D, K, A und B weisen dabei die bei der Formel I genannte Bedeutung auf.

Die nach den obigen Verfahren erhältlichen, neuen Chromkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedenen natürlichen oder synthetischen Polyamidmaterialien, wie Wolle, Seide, synthetische Polyamidfasern, Polyurethane, insbesondere aber zum Färben von Wolle und Leder.

Die neuen Farbstoffe sind farbstark und decken gut. Sie haben ein gutes Ziehvermögen bei gleichzeitig guten Echtheiten wie Wasch-, Wasser-, Schweiss-, Reib-, Diffusions-, Licht-, Säure- und Alkalistabilität. Außerdem sind sie weitgehend umempfindlich gegenüber Ca-Salzen im Färbebad, was meistens die Verwendung von nichtenthärtetem Wasser gestattet. Besondere Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige

braune bis schwarze Nuancen. Weiterhin ist die besondere Eignung der Farbstoffe der Formel I zum Färben filzfrei ausgerüsteter Wolle hervorzuheben.

Beispiel 1

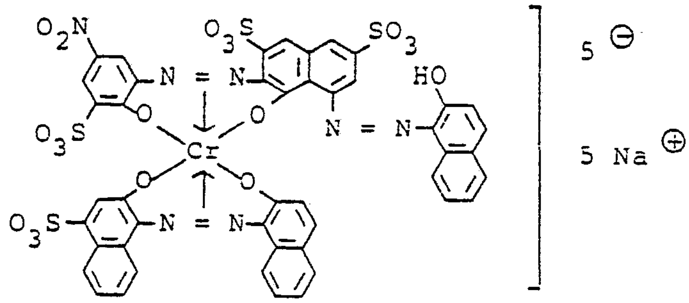

240 Teile 4-Nitro-2-amino-1-hydroxy-benzol-6-sulfosäure werden in 2 000 Teilen Wasser angerührt und mit Salzsäure und Eis auf 5 °C abgekühlt. Man tropft 320 Volumenteile Natriumnitritlösung 3,3n zu und rührt zwei Stunden bei 7 °C nach. Nachdem überschüssiges Nitrit mit Amidosulfosäure zerstört ist, läuft die Diazolösung in eine Lösung aus 319 Teilen 1-Hydroxy-8-aminonaphthalin-3,6-disulfosäure, die in 2 000 Teilen Wasser mit 40 Teilen Natriumhydroxid und 150 Teilen Natriumcarbonat gelöst und mit Eis auf 10 °C gestellt wurde. Die Kupplung ist nach etwa zwei Stunden beendet. Mit Salzsäure wird ein pH von 6 eingestellt und es laufen 310 Volumenteile Natriumnitritlösung 3,3n zu. Man kühlt durch Zugabe von Eis auf 5 °C ab und stellt mit Salzsäure einen pH von 0,6 ein. Nachdem die Diazotierung beendet ist, wird der Diazoazofarbstoff zu einer Lösung aus 146 Teilen 2-Naphthol in 2 000 Teilen Wasser, 41 Teilen Natriumhydroxid und 600 Teilen Natriumcarbonat gegeben. Die Temperatur des Kupplungsgemisches wird durch Eintragen von Eis auf 15 °C gehalten. Nach beendeter Kupplung wird abgesaugt.

Die erhaltene Paste wird in 4 000 Teilen Wasser angerührt und mit einem Preßkuchen enthaltend den 1 : 1-Chromkomplex aus 52 Teilen Chrom und 384 Teilen des Monoazofarbstoffs aus diazotierter 1-Amino-2-hydroxy-naphthalin-4-sulfonsäure und 2-Hydroxynaphthalin versetzt. Man erhitzt auf 70 °C und hält durch Zugabe von Natronlauge einen pH von 7-7,5. Man erwärmt so lange, bis die Ausgangsprodukte chromatographisch nicht mehr nachzuweisen sind. Der Farbstoff wird durch Sprühtrocknung isoliert und stellt ein dunkles, sehr gut wasserlösliches Pulver dar. Wolle und filzfrei ausgerüstete Wolle werden schwarz mit sehr guten Echtheiten gefärbt. Die schwarze Lederfärbung hat eine gute Lichtechtheit und hohe Farbstärke auch auf nachgegerbtem Leder. Farbstoffe mit ähnlichen Eigenschaften werden erhalten, wenn die 1:1-Chromkomplexe der folgenden Azofarbstoffe eingesetzt werden :

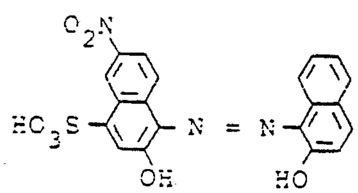

schwarz

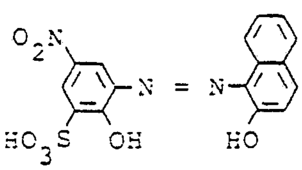

schwarz

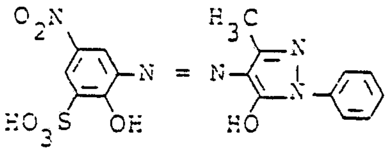

braun

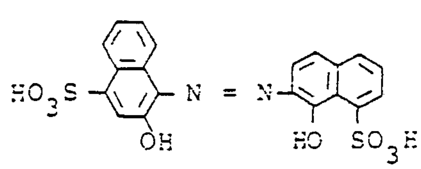

blaustichig schwarz

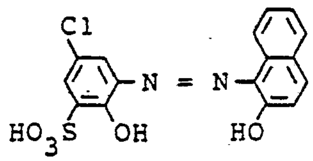

schwarz

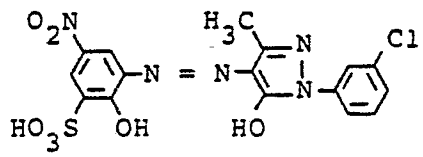

braun

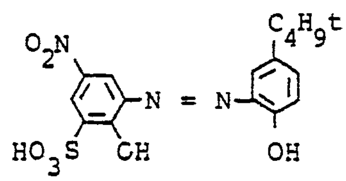

schwarz

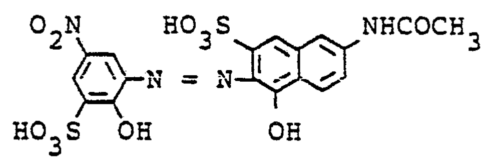

schwarz

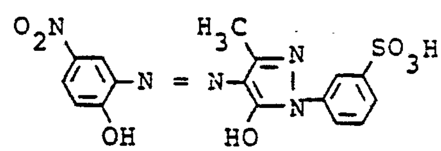

braun

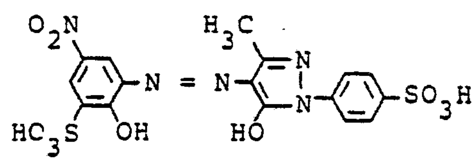

braun

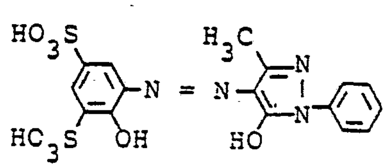

braun

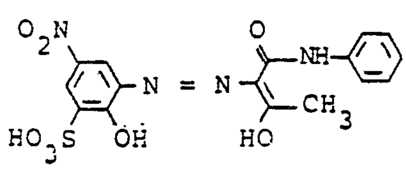

olivbraun

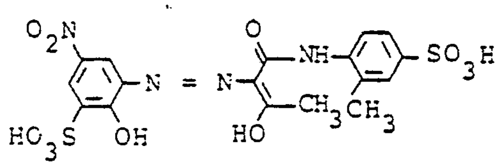

olivbraun

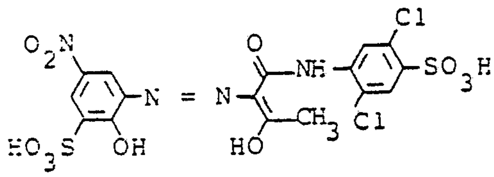

olivbraun

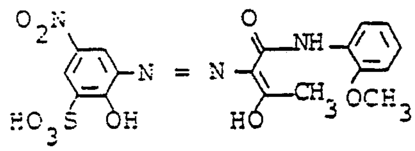

olivbraun

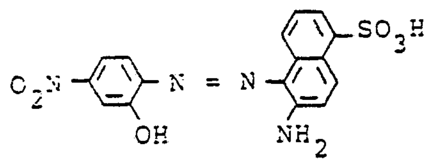

graublau

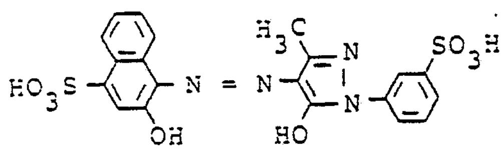

violettstichig braun

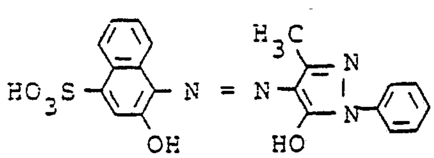

violettstichig braun

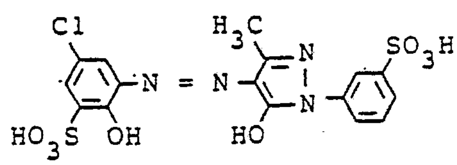

braun

Beispiel 2

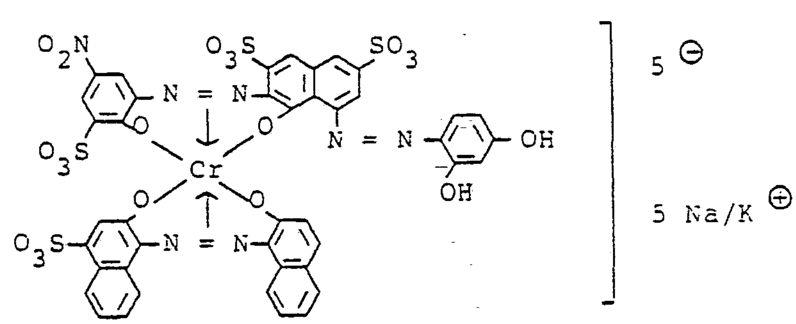

120 Teile 4-Nitro-2-amino-1-hydroxybenzol-6-sulfosäure werden in 1 000 Teilen Wasser mit 275 Raumteilen Salzsäure und Eis auf 7 °C gestellt. Man tropft 160 Volumenteile Natriumnitritlösung 3,3n zu und rührt zwei Stunden nach. Nachdem überschüssiges Nitrit zerstört ist, läuft die Diazokomponente in eine Lösung aus 160 Teilen 1-Hydroxy-8-aminonaphthalin-3,6-disulfosäure, die in 1 000 Teilen Wasser mit 20 Teilen Natriumhydroxid und 75 Teilen Natriumcarbonat gelöst und mit Eis auf 10 °C gestellt ist. Die

Kupplung ist nach drei Stunden beendet. Man stellt mit Salzsäure einen pH von 0,6 ein und gibt 160 Volumenteile Natriumnitritlösung 3,3n zu. Die Diazotierung ist nach 30 Minuten beendet. Der Diazotierungsansatz läuft in eine Lösung aus 60 Teilen Resorcin in 1 000 Teilen Wasser, 20 Teilen Natriumhydroxid und 250 Teile Natriumcarbonat. Die Kupplung wird über Nacht gerührt, und der Farbstoff durch Zugabe von 1 500 Teilen Natriumchlorid ausgefällt und abgesaugt.

Das erhaltene Preßgut wird in 2 500 Teilen Wasser angerührt und mit dem Preßgut des 1 : 1-Chromkomplexes aus 26 Teilen Chrom und 192 Teilen des Monoazofarbstoffs aus diazotierter 1-Amino-2-hydroxynaphthalin-4-sulfonsäure und 2-Hydroxynaphthalin versetzt. Mit Natronlauge wird ein pH von 7-7,5 gehalten. Die Anlagerung ist nach sieben Stunden bei 70 °C beendet. Durch Zugabe von 1 000 Teilen Natrium- und 1 250 Teilen Kaliumchlorid wird der Farbstoff ausgefällt. Man erhält nach dem Absaugen und Trocknen 325 Teile eines schwarzen Pulvers. Wolle und Leder werden schwarz gefärbt. Die Echtheiten der erhaltenen Färbungen sind gut.

Ähnlich gute Farbstoffe werden mit den 1 : 1-Chromkomplexen folgender Farbstoffe erhalten :

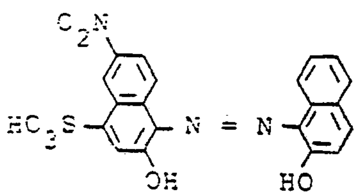

schwarz

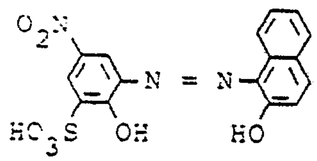

schwarz

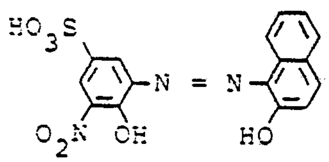

schwarz

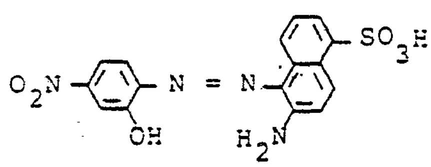

schwarz

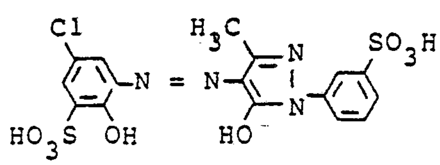

braun

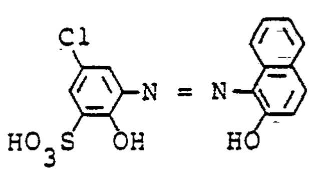

schwarz

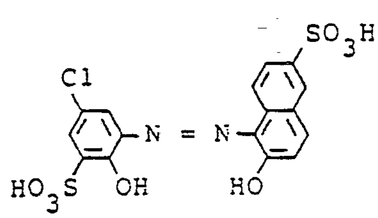

schwarz

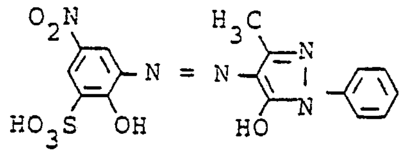

braun

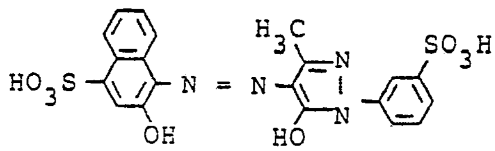

rotstichig schwarz

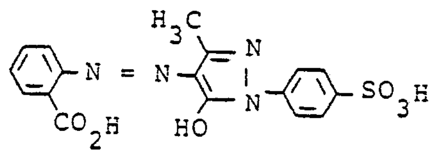

olivbraun

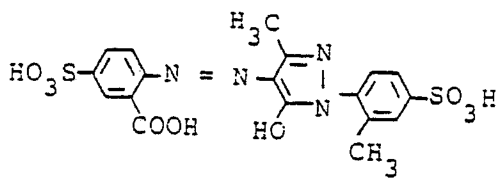

olivbraun

Beispiel 3

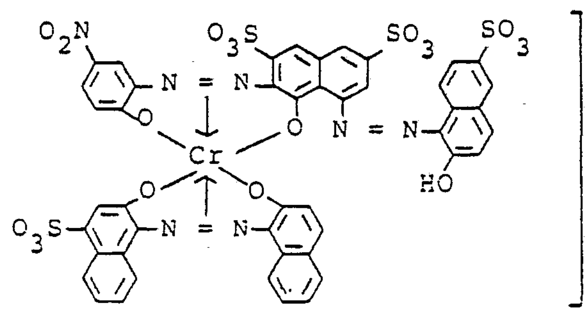

5 ⊖

5 Na ⊕

77 Teile 4-Nitro-2-aminophenol werden in 1 000 Teilen Wasser mit Salzsäure und Eis versetzt. Durch Zugabe von 160 Volumenteilen Natriumnitritlösung 3,3n wird diazotiert. Die Diazosuspension läuft in eine Lösung aus 160 Teilen 1-Hydroxy-8-aminonaphthalin-3,6-disulfosäure in 1 000 Teilen Wasser, 20 Teilen Natriumhydroxid und 70 Teilen Natriumcarbonat. Die Kupplung ist in zwei Stunden beendet. Man stellt mit Salzsäure auf pH 6,5, stürzt 160 Volumenteile Natriumnitritlösung 3,3n ein, kühlt mit Eis auf 10 °C ab und tropft solange Salzsäure ein, bis ein pH von 1,5 erreicht ist. Die Diazotierung ist nach drei Stunden beendet. Überschüssiges Nitrit wird mit Amidosulfosäure zerstört. Die Diazokomponente läuft in eine Lösung aus 113 Teilen 2-Hydroxynaphthalin-6-sulfosäure in 800 Teilen Wasser, 16 Teilen Natriumhydroxid und 150 Teilen Natriumcarbonat. Die Temperatur wird durch Zugabe von Eis auf 10 °C gehalten. Die Kupplung ist über Nacht beendet. Man saugt ab.

Das Preßgut wird in 1 000 Teilen Wasser mit dem Preßkuchen des 1 : 1-Chromkomplexes aus 26 Teilen Chrom und 192 Teilen des Monoazofarbstoffs aus diazotierter 1-Amino-2-hydroxy-naphthalin-4-sulfonsäure und 2-Hydroxynaphthalin versetzt. Man rührt vier Stunden bei 70 °C und hält mit verdünnter Natronlauge auf pH = 7,5. Man klärfiltriert und isoliert durch Sprühtrocknung. Das schwarze Farbstoffpulver färbt Wolle und Leder in schwarzen Tönen mit sehr guten Echtheiten.

Ähnliche Farbstoffe werden mit den 1 : 1-Chromkomplexen folgender Verbindungen erhalten :

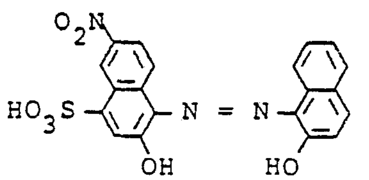

schwarz

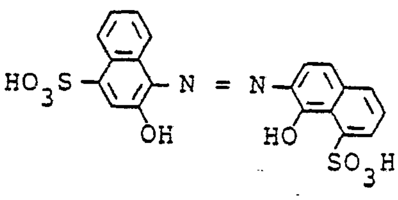

schwarz

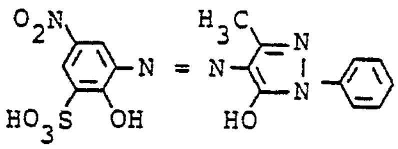

braun

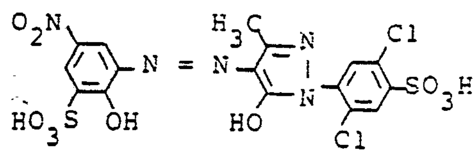

braun

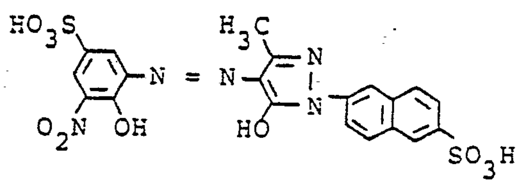

braun

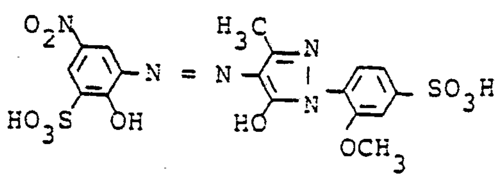

braun

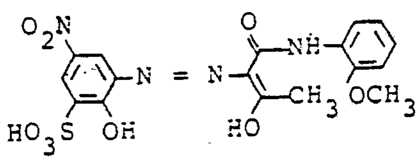

olivbraun

Beispiel 4

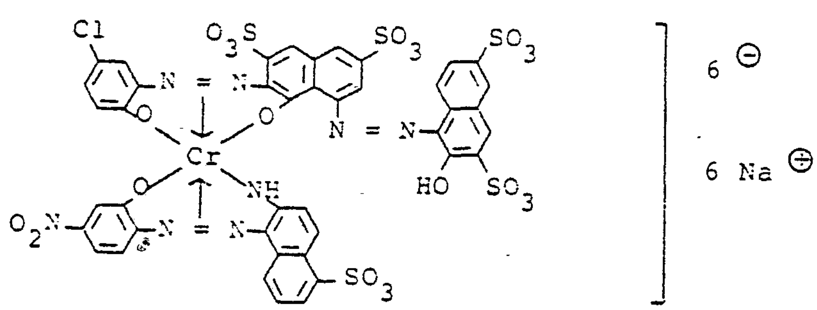

14,5 Teile 2-Hydroxy-1-amino-5-Chlorbenzol werden mit 100 Teilen Wasser verrührt. Dazu gibt man 15 Volumenteile konzentrierte Salzsäure, 100 Teile Eis und 30 Volumenteile 23 %ige Natriumnitritlösung. Man rührt zwei Stunden bei 5 °C nach, zerstört überschüssiges Nitrit mit Amidosulfosäure und trägt das Diazotierungsgemisch in eine Lösung aus 30 Teilen 1-Hydroxy-8-aminonaphthalin-3,6-disulfosäure in 100 Volumenteilen 5 %iger Natronlauge und 30 Teilen Natriumcarbonat ein. Nach beendeter Kupplung wird

mit Salzsäure auf pH = 6 gestellt und eine halbe Stunde nachgerührt. Nun laufen 30 Volumenteile 23 %iger Natriumnitritlösung zu. Man fügt 200 Teile Eis und 70 Volumenteile Salzsäure zu, rührt zwei Stunden nach und zerstört überschüssiges Nitrit. Die Diazoazosuspension läuft in eine Lösung aus 2-Hydroxynaphthalin-3,6-disulfosäure (31 Teile) in 300 Teilen Wasser, 200 Teilen Eis und 80 Teilen Natriumcarbonat. Nach beendeter Kupplung wird angesäuert und abgesaugt. Das isolierte Produkt wird mit 500 Teilen Wasser angerührt, auf 70 °C erwärmt, dann gibt man soviel des 1 : 1-Chromkomplexes von diazotiertem 5-Nitro-2-aminophenol und 2-Aminonaphthalin-5-sulfosäure hinzu, wie für die vollständige Anlagerung zum unsymmetrischen 1 : 2-Chromkomplex benötigt wird. Nach beendeter Umsetzung wird eingedampft.

Der gut wasserlösliche Farbstoff färbt Wolle und Leder blaugrau an.

Ähnliche Chromkomplexe werden mit den 1 : 1-Chromkomplexen folgender Verbindungen erhalten :

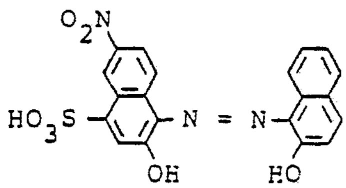

schwarz

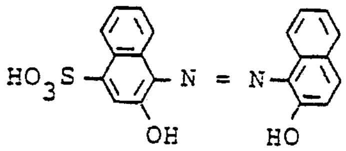

blaugrau

Beispiel 5

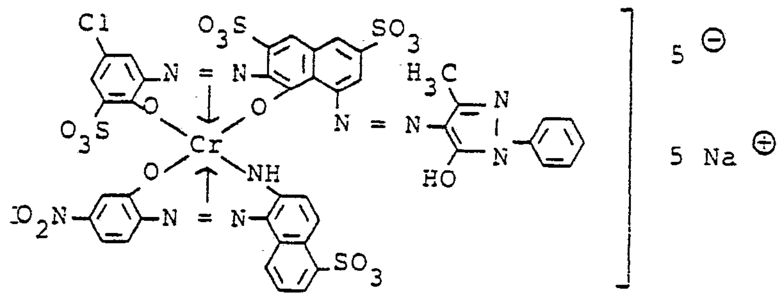

Zu einer Lösung von 22,35 Teilen 5-Chlor-2-hydroxy-1-aminobenzol-3-sulfonsäure in 2 000 Raumteilen 2 %iger Natronlauge gibt man 30 Raumteile 23 %ige Natriumnitrit-Lösung. Diese Mischung läßt man allmählich in ein Gemisch aus 30 Raumteilen konzentrierter Salzsäure und 250 Teilen Eis bei 0-5 °C einfließen. Das Ganze wird 2 Stunden bei 0-5 °C nachgerührt und dann langsam zu einer Mischung aus 30 Teilen 1-Amino-8-hydroxynaphthalin-3,6-disulfonsäure, 100 Raumteilen 4 %iger Natronlauge, 50 Teilen Eis und 35 Teilen Natriumcarbonat hinzugegeben. Nach beendeter Kupplung wird das Kupplungsprodukt durch Zugabe von 80 Raumteilen konzentrierter Salzsäure und 200 Raumteilen gesättigter Natriumchlorid-Lösung ausgefällt und abgesaugt.

Der Filterkuchen wird in 500 Teilen 1 %iger Natronlauge gelöst. Diese Lösung läßt man zusammen mit 30 Raumteilen 23 %iger Natriumnitritlösung in ein Gemisch aus 70 Raumteilen konzentrierter Salzsäure, 300 Teilen Wasser und 400 Teilen Eis allmählich einfließen. Nach 2-stündigem Rühren bei 0-5 °C setzt man dem Diazotierungsgemisch zunächst eine Lösung von 19 Teilen 1-Phenyl-3-methylpyrazolon-(5) in 220 Raumteilen 2 %iger Natronlauge hinzu und stellt dann allmählich auf pH 6. Der so erhaltene Disazofarbstoff wird abgesaugt und mit verdünnter Natriumchlorid-Lösung gewaschen. Die Gesamtmenge des erhaltenen Farbstoffs wird bei 40 °C mit 400 Teilen Wasser und 10 Teilen 25 %igem Ammoniak angerührt. Dann setzt man die äquivalente Menge des auf bekannte Weise zugänglichen 1 : 1-Chromkomplexes des Farbstoffs aus diazotiertem 4-Nitro-2-hydroxy-1-aminobenzol → 2-Aminonaphthalin-5-sulfonsäure zu. Wenn die Anlagerung beendet ist, was sich chromatographisch leicht feststellen läßt, dampft man das Ganze zur Trockne. Das schwarze Pulver löst sich in Wasser mit gedecktgrüner Farbe und färbt Wolle und Leder in grünstichig schwarzen Tönen.

Ähnliche Farbstoffe werden mit den 1 : 1-Chromkomplexen folgender Verbindungen erhalten :

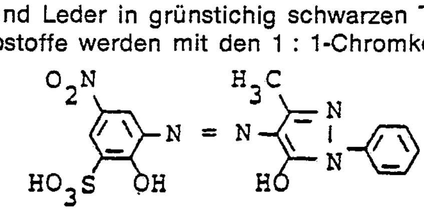

braun

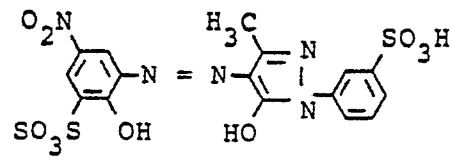

braun

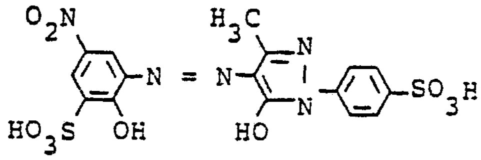

braun

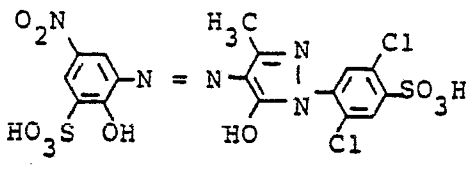

braun

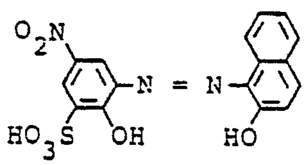

schwarz

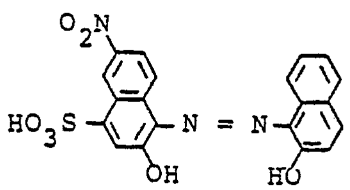

schwarz

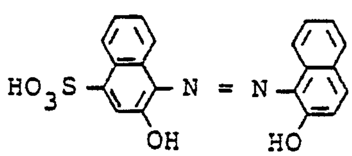

schwarz

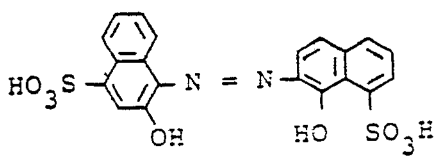

schwarz

Farbstoffe mit ähnlichen Eigenschaften werden erhalten, wenn man den 1 : 1-Chromkomplex der in Spalte 1 genannten Verbindung im Verhältnis 1 : 1 mit dem in Spalte 2 aufgeführten Disazofarbstoff umsetzt. Die Farbstoffe färben Wolle und Leder in den in Spalte 3 angegebenen Tönen mit guten Echtheiten.

(Siehe Tabelle Seite 13 ff.)

| 1 | 2 | 3 |
|---|---|---|
| 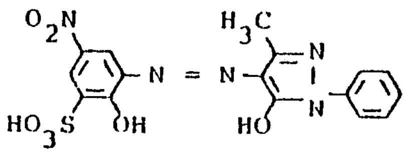 | 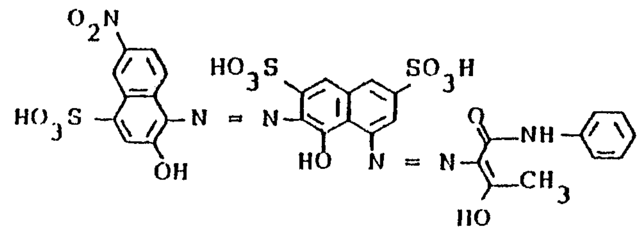 | braun |
| 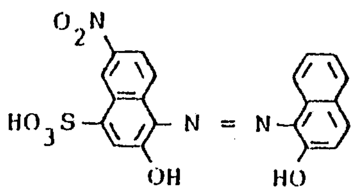 | 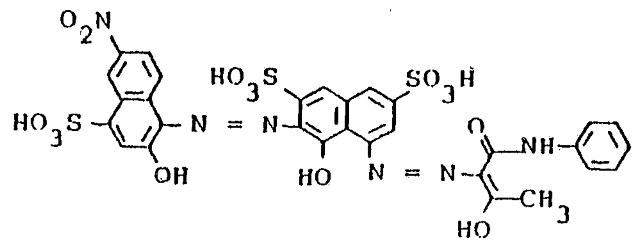 | schwarz |
| 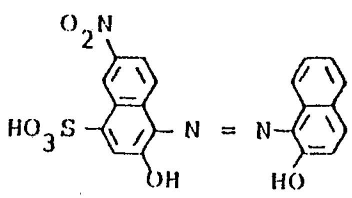 | 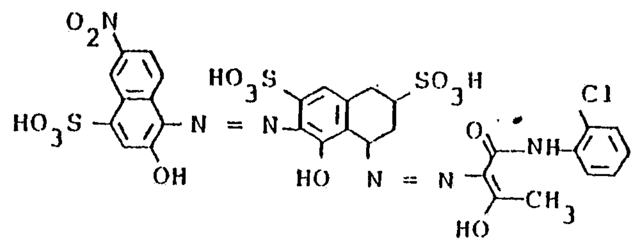 | schwarz |

| 1 | 2 | 3 |
|---|---|---|
| 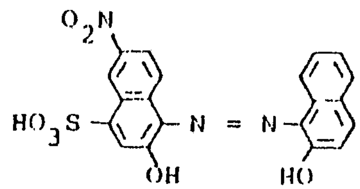 | 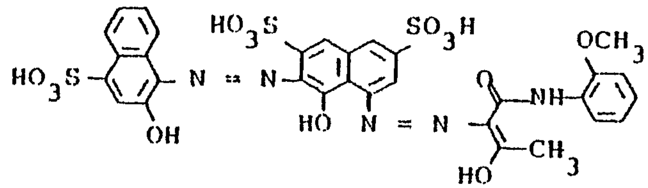 | schwarz |
| 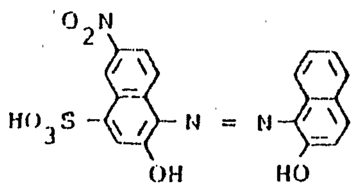 | 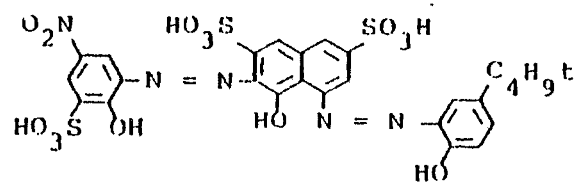 | schwarz |
| 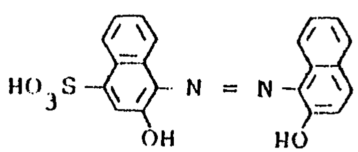 | 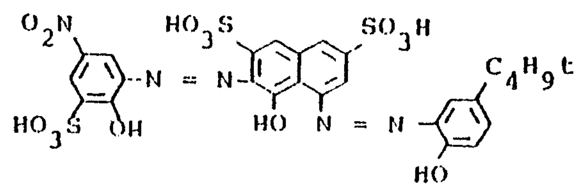 | schwarz |

| 1 | 2 | 3 |
|---|---|---|
| 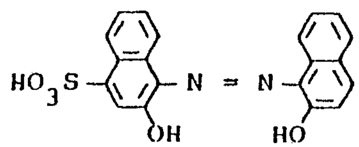 | 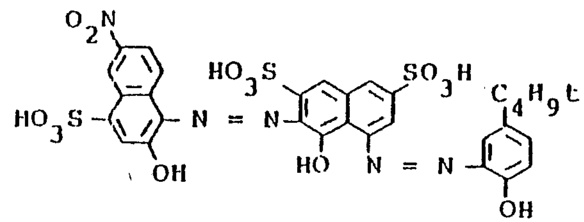 | schwarz |
| 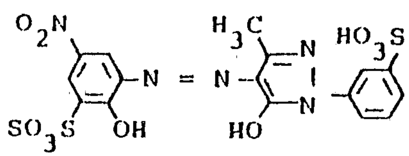 | 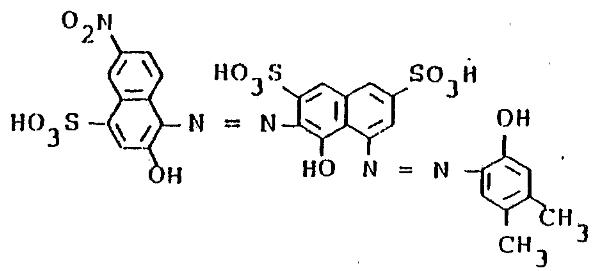 | braun |
| 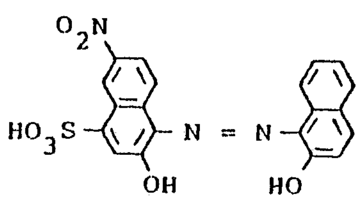 | 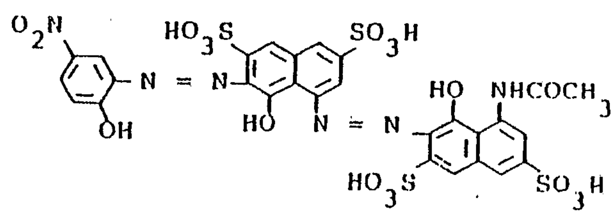 | schwarz |

| 1 | 2 | 3 |
|---|---|---|
| 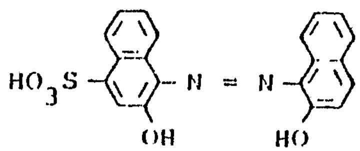 | 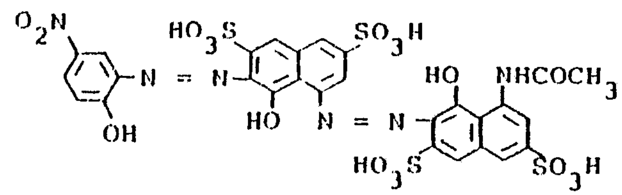 | schwarz |
| 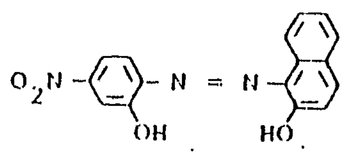 | 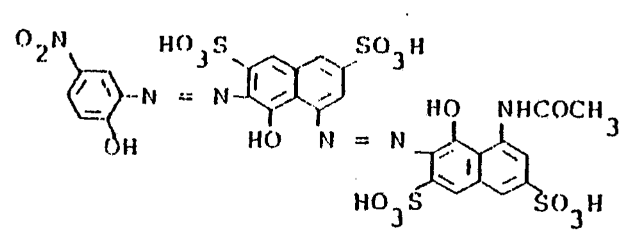 | schwarz |
| 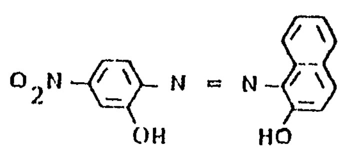 | 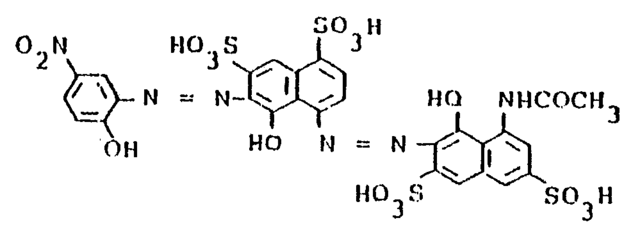 | schwarz |

| 1 | 2 | 3 |
|---|---|---|
| 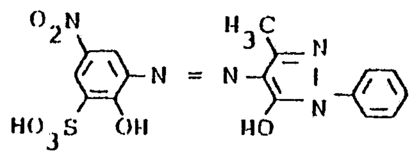 | 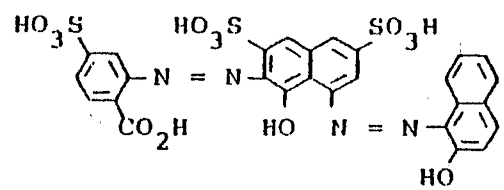 | braun |
| 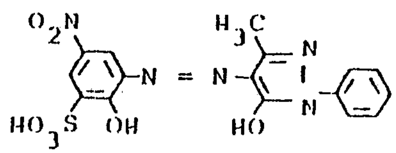 | 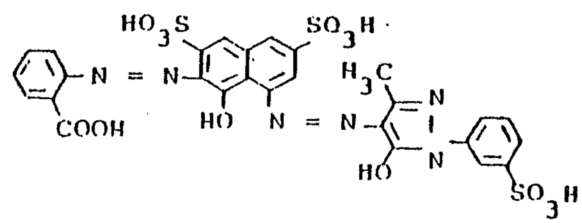 | braun |
| 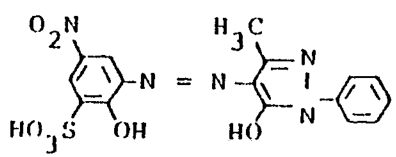 | 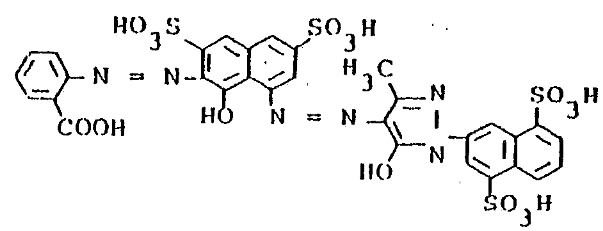 | braun |

| 1 | 2 | 3 |
|---|---|---|
| 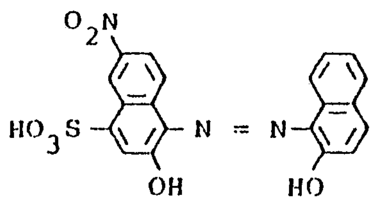 | 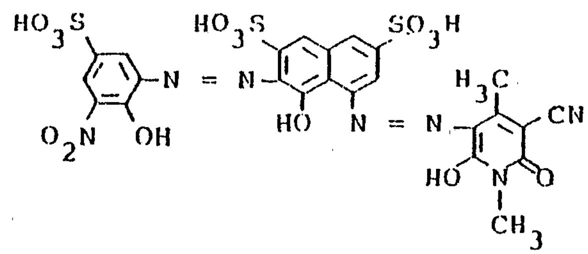 | schwarz |

**Patentansprüche**

1. Sulfonamid- und aminogruppenfreie Metallkomplexfarbstoffe, die in Form der freien Säuren der allgemeinen Formel I

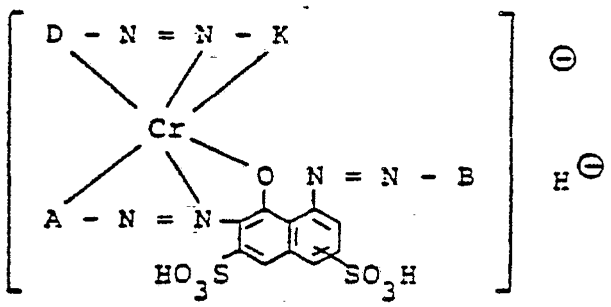

(I)

entsprechen, in der

A ein Rest einer Diazokomponente der Benzol- oder Naphthalinreihe mit einer Hydroxy- oder Carboxygruppe in Nachbarstellung zur Azobrücke,

B und

K der Rest einer Kupplungskomponente und

D der Rest einer aromatischen Diazokomponente sind, wobei K und D jeweils in o-Stellung zur Azogruppe eine metallisierbare Gruppe tragen, mit der Maßgabe, daß die Verbindungen der Formel I insgesamt 4 oder 5 Sulfogruppen tragen.

2. Farbstoffe gemäß Anspruch 1 der Formel

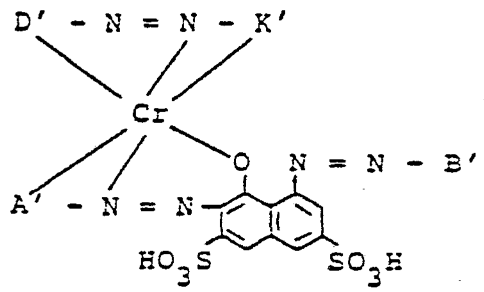

,

worin A' der Rest eines 1-Hydroxy-2-aminobenzols ist, welcher ein- oder zweimal durch Chlor, Nitro oder Sulfo substituiert ist, B' ein 2-Naphthol-, Resorcin-, p-Alkyl-($C_1$-$C_6$)-phenol-, 1-Phenyl-3-methyl-5-pyrazolon- oder Acetessigsäureanilidrest, wobei die Phenylgruppe in den beiden letztgenannten Verbindungen durch $C_1$-$C_4$-Alkyl, $C_1$-$C_4$-Alkoxy, Chlor oder Sulfo substituiert sein kann, K' ein gegebenenfalls durch Sulfo substituierter 1-Naphthol- oder 2-Naphtholrest, in p-Stellung durch $C_1$-$C_6$-Alkyl substituierter Phenolrest, ein gegebenenfalls durch Sulfo substituierter 2-Naphthylamin-, ein 1-Phenyl-3-methyl-5-pyrazolon- oder Acetessigsäureanilidrest, wobei die Phenylgruppe in den beiden letztgenannten Verbindungen durch $C_1$-$C_4$-Alkoxy, Chlor oder Sulfo substituiert sein kann und D' den Rest eines 1-Hydroxy-2-aminobenzols oder 1-Amino-2-hydroxynaphthalins, welches noch durch Nitro und/oder Sulfo substituiert ist, bedeuten.

3. Verwendung der Verbindungen gemäß Anspruch 1 zum Färben stickstoffhaltiger Fasern sowie von Leder.

**Claims**

1. A metal complex dye which is free of sulfonamido and amino groups and, in the form of the free acid, corresponds to the general formula I

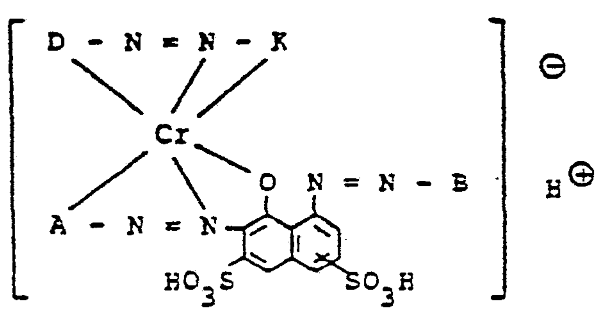

(I)

where

A is a radical of a diazo component of the benzene or naphthalene series, having a hydroxyl or carboxyl group in the position adjacent to the azo bridge,

B and

K are each the radical of a coupling component and

D is the radical of an aromatic diazo component, and K and D each carry a metallizable group ortho to the azo group, with the proviso that the compound of the formula I possesses a total of 4 or 5 sulfo groups.

2. A dye as claimed in claim 1, of the formula

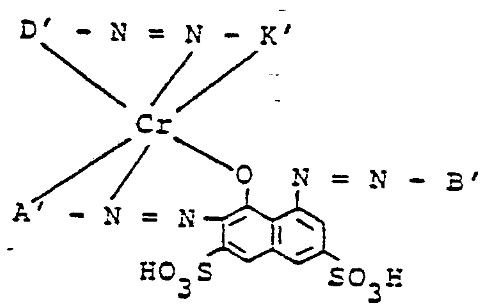
,

where A' is the radical of a 1-hydroxy-2-aminobenzene which is monosubstituted or disubstituted by chlorine, nitro or sulfo, B' is a naphth-2-ol, resorcinol, p-($C_1$-$C_6$-alkyl)-phenol, 1-phenyl-3-methylpyrazol-5-one or acetoacetanilide radical, and the phenyl group in the two last-mentioned compounds can be substituted by $C_1$-$C_4$-alkyl, $C_1$-$C_4$-alkoxy, chlorine or sulfo, K' is an unsubstituted or sulfo-substituted naphth-1-ol or naphth-2-ol radical, phenol which is substituted in the p-position by $C_1$-$C_6$-alkyl, an unsubstituted or sulfo-substituted 2-naphthylamine, a 1-phenyl-3-methylpyrazol-5-one or an acetoacetanilide radical, and the phenyl group in the two last-mentioned compounds can be substituted by $C_1$-$C_4$-alkoxy, chlorine or sulfo, and D' is the radical of a 1-hydroxy-2-aminobenzene or 1-amino-2-hydroxynaphthalene which is further substituted by nitro and/or sulfo.

3. The use of a compound as claimed in claim 1 for dyeing nitrogen-containing fibers and leather.

**Revendications**

1. Complexes de colorants métallifères dépourvus de groupes amino et sulfonamide qui, sous la forme des acides libres, répondent à la formule générale I

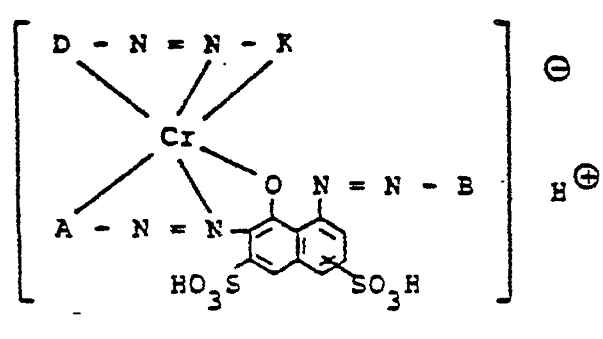
(I)

dans laquelle

A est le radical d'un composant de diazoïque de la série du benzène ou du naphtalène, avec un groupe hydroxy ou carboxy en position voisine par rapport au pont azo,

B et

K sont chacun le radical d'un composant de copulation et

D est le radical d'un composant de diazoïque aromatique, K et D portant chacun, en position ortho par rapport au groupement azo. un groupe métallisable, avec cette condition que les composés de formule I portent au total 4 ou 5 groupes sulfonés.

2. Colorants selon la revendication 1, de formule

(Voir dessin page 21)

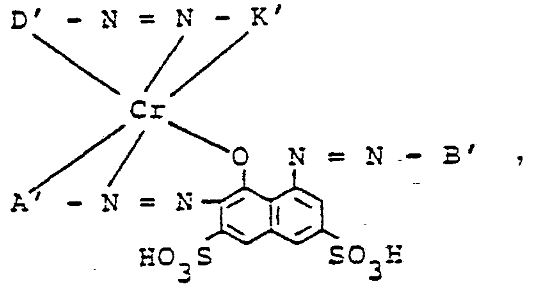

dans laquelle A′ est le radical d'un 1-hydroxy-2-aminobenzène qui est substitué une ou deux fois par un chlore, un nitro ou un sulfo, B′ est un radical 2-naphtol, résorcine, p-alkyl ($C_1$-$C_6$)-phénol, 1-phényl-3-méthyl-5-pyrazolone ou anilide d'acide acétylacétique, le groupe phényle dans les deux composés cités en dernier pouvant être substitué par un alkyle en $C_1$-$C_4$, un alcoxy en $C_1$-$C_4$, un chlore ou un sulfo, K′ est un radical 1-naphtol ou 2-naphtol éventuellement substitué par un groupe sulfo, un radical phénol substitué en position p par un alkyle en $C_1$-$C_6$, un radical 2-naphtylamine éventuellement substitué par un sulfo, un radical 1-phényl-3-méthyl-5-pyrazolone ou anilide d'acide acétylacétique, le groupe phényle dans les deux composés cités en dernier pouvant être substitué par un alcoxy en $C_1$-$C_4$, un chlore ou un sulfo, et D′ est le radical d'un 1-hydroxy-2-aminobenzène ou d'un 1-amino-2-hydroxynaphtalène qui est encore substitué par un groupe nitro et/ou sulfo.

3. Utilisation des composés selon la revendication 1 pour la teinture de fibres azotées, ainsi que de cuirs.